# EUROPEAN PATENT SPECIFICATION

(11) **EP 4 511 518 B1**
(45) Date of publication and mention of the grant of the patent: **03.06.2026**
(21) Application number: 23725309.1
(22) Date of filing: 21.04.2023
(51) Int. Cl.: F27D 17/20, F27D 17/30

(54) **METALLURGICAL PLANT AND METHOD**
METALLURGISCHE ANLAGE UND VERFAHREN
INSTALLATION MÉTALLURGIQUE ET PROCÉDÉ

(30) Priority: 22.04.2022 IT 202200008006
(43) Date of publication of application: 26.02.2025
(73) Proprietor: DANIELI & C. OFFICINE MECCANICHE S.P.A., 33042 Buttrio (UD) (IT)
(72) Inventor: PRIMAVERA, Alessandra, 33040 Faedis (UD) (IT); DALLE NOGARE, Daniela, 33040 Povoletto (UD) (IT); DELLA NEGRA, Angelico, 33040 Povoletto (UD) (IT)
(74) Representative: Petraz, Gilberto Luigi
(86) International application number: PCT/IT2023/050108
(87) International publication number: WO 2023/203588

(56) References cited:
- EP-B1- 0 256 138
- CN-A- 113 234 933
- DE-C1- 4 302 357

## Description

### FIELD OF THE INVENTION

The present invention concerns a metallurgical plant and a method for treating steelworks by-products, such as for example powders separated from the fume treatment plant of electric arc furnaces (EAF) for the production of steel, typically from scrap, possibly with pre-reduced iron or other.

In particular, the metallurgical plant described here comprises at least one smelting furnace, advantageously of the fixed type, fed with said by-products, and an apparatus for treating the unburned gases and metal vapors emitted by the smelting furnace, in order to recover at least part of the zinc (Zn) contained in the latter, in the form of zinc oxide (ZnO) deposits, but also the metallic iron in the form of cast iron which can be recycled in the steelworks. The remaining zinc oxide is separated by filtration downstream of the treatment apparatus. Furthermore, the slag obtained is inert and suitable for use in other industrial processes.

### BACKGROUND OF THE INVENTION

Iron and steel plants are known which comprise, among the various machines, at least one EAF (Electric Arc Furnace) smelting furnace into which a metal charge, for example scrap iron and/or pre-reduced iron, is fed and then melted, and at least one rolling line for the production of determinate metal products, such as rolled products for example.

From the smelting of this metal charge and from the production of these metal products, steelworks by-products are generated, the recycling of which, nowadays, is not only a necessity linked to environmental protection, but also a technological and economic opportunity.

Normally, the by-products comprise both powders, deriving from the combustion fumes consequent to the smelting of the metal charge, and also mill scale, which consists mainly of iron oxides (FeₓO_{y}) and possibly traces of emulsions deriving from the rolling process. In particular, the powders contain a plurality of metal oxides, each with a different percentage by weight in relation to the type of scrap introduced into the smelting furnace. For example, the metal oxides of greatest interest for recovery are iron (Fe) and zinc (Zn) oxides.

The by-products are normally delivered to transformation centers for partial reuse. Naturally, both the transport and the loss of these by-products constitute a burden for the steelworks and also a burden from an environmental point of view, since the transformation centers are often located in other states, even several hundred kilometers away from them; moreover, the disposal of these materials entails high costs.

In particular, the recovery of zinc oxide from such by-products is a very important operation from an environmental point of view and is also economically convenient, since it also has a high commercial value.

In the state of the art, this operation can optionally be performed by pyrometallurgical or hydrometallurgical means; however, in most cases the well-known Waelz process is used, which provides to use a rotary-type furnace where the powders produced by the EAF, together with a carbon content to produce a solid fraction containing ZnO at a high concentration and a residue which is also solid, considered production waste which must be suitably disposed of.

However, the Waelz process has several disadvantages, including:
- it does not allow to recover other metals, in particular Fe;
- it uses only chemical energy of a fossil nature, which gives a high production of carbon dioxide (CO₂); this has a great impact from an environmental point of view.

Among the prior art documents, document DE 4.302.357 C1 is known, which describes a system for treating exhaust fumes and/or gases of a steel production unit, such as an electric arc furnace, to recover the zinc present in them. For this purpose, the system provides an electrostatic precipitator, and the exhaust gases are treated in a steam boiler. The system, however, does not provide to perform several injections of oxidizing agents to promote the extraction of the zinc from said exhaust fumes and/or gases.

Document EP 0.256.138 B1 is known, which describes an electric plant for the production of steel. It provides a system for preheating the scrap by means of gases/fumes exiting from the electric furnace for producing the steel, and a system for purifying the exhaust gases/fumes. The plant provides a combustion apparatus shaped and designed to separate and collect most of the particulate matter and powder present in the exhaust gases/fumes that pass through it. Moreover, the exhaust gases/fumes purification system essentially comprises a gases/fumes damper, a wet electric precipitator, a flow rate adjustment tank and a sprayer.

Document CN 113.234.933 A is also known, which describes a recycling system for the treatment of the powder of the electric furnace by using methane. The recycling system comprises, for example, a cyclonic flow reducer having a separation tube, a magnetic-type separator, a grinder, a capacitor, and a plurality of storage tanks of air, water, zinc, iron, and other waste residues.

There is therefore a need to perfect a metallurgical plant and method which are able to overcome the disadvantages of the state of the art.

To do this, it is necessary to solve the technical problem of performing an effective recovery of the zinc, alternative to the Waelz process.

One purpose of the present invention is to provide a metallurgical plant and to perfect a method which allow to obtain high productivity, and which are highly efficient.

Another purpose of the present invention is to provide a metallurgical plant and to perfect a method with which it is possible to recover both zinc oxide and also metallic iron in the form of cast iron recyclable in the steelworks and to obtain an inert slag, preferably suitable to be used in other industrial processes.

Another purpose of the present invention is to provide a metallurgical plant which is simple to manufacture, which as far as possible has stationary and above all non-rotating parts, and which has low manufacturing and operating costs.

The Applicant has devised, tested and embodied the present invention to overcome the shortcomings of the state of the art and to obtain these and other purposes and advantages.

### SUMMARY OF THE INVENTION

The present invention is set forth and characterized in the independent claims, while the dependent claims describe other characteristics of the present invention or variants to the main inventive idea.

In accordance with the above purposes and to resolve the technical problem disclosed above in a new and original way, also achieving considerable advantages compared to the state of the prior art, some embodiments described here concern a metallurgical plant for treating steelworks by-products, comprising powders deriving from the production of steel by means of an electric arc furnace (EAF) and containing zinc (Zn) and iron (Fe) oxides, and possibly with added further iron oxides in the form of slag originating from rolling.

According to one embodiment, the metallurgical plant comprises at least one smelting furnace configured to reduce and smelt reducible metal oxides present in the by-products and generate consequent metal vapors and combustible gases, which here are defined fumes.

The plant also comprises a treatment apparatus associated with the smelting furnace and able to treat the fumes, in particular to create the oxidation of the metal vapors and the combustible gases, also called combustion of the fumes.

In accordance with one aspect of the present invention, the apparatus is provided with static means for extracting and separating zinc oxide, in particular the powders containing a high concentration of zinc oxide, from the fumes.

These static extraction and separation means comprise at least one combustion chamber able to receive the fumes coming from the smelting furnace, a treatment duct in fluid-dynamic connection with the combustion chamber, and a plurality of injection means associated with the combustion chamber and with the treatment duct, respectively, which are configured to inject at least one oxidizing agent into the fumes to oxidize the zinc contained therein in order to extract it in the form of zinc oxide and for the oxidation of the carbon monoxide present in the fumes.

In particular, the injection means comprise:
first injection means associated with the combustion chamber and configured to inject a first quantity of the oxidizing agent into the fumes; and
second injection means associated with the treatment duct in proximity to an upper zone of the combustion chamber and configured to inject a second quantity of the oxidizing agent, possibly different from the first quantity, into the fumes.

In accordance with another aspect of the present invention, the injection means also comprise accessory injection means disposed along the treatment duct and configured to inject further quantities of the oxidizing agent, possibly different from the first and second quantity, into the fumes in order to transform them into combustion fumes to be sent to a filtration apparatus.

After completing the oxidation of all the species contained in them, the fumes exiting from the treatment apparatus described here can therefore be defined as combustion fumes and, in particular, they can be cooled and sent to the filtration apparatus.

In accordance with another aspect of the present invention, the treatment duct has a coiled shape and comprises at least three essentially vertical segments, for example and in particular close to each other and possibly consecutive. The three segments are connected at the top by means of at least one upper part in the shape of a loop and at the bottom by means of at least one lower part. In particular, under the combustion chamber and in correspondence with the at least one lower part there are disposed respective collection members to collect the zinc oxide deposits, or at least part of them. Moreover, the accessory injection means are disposed preferably in correspondence with the loop-shaped upper part.

In some embodiments, the plant comprises one or more filtration apparatuses disposed downstream of the treatment apparatus as above and configured to receive combustion fumes coming from the treatment apparatus in order to filter ZnO remaining in the combustion fumes.

In accordance with another aspect of the present invention, the apparatus also comprises both first additional injectors associated with the combustion chamber and configured to inject a cooling agent into the fumes, and also second additional injectors associated with a first of the collection members and configured to inject an inerting agent into the zinc oxide deposits present in the first of the collection members.

In accordance with another aspect of the present invention, the injection means comprise one or more injection nozzles.

Preferably, the oxidizing agent can comprise air, oxygen, or enriched air; the cooling agent can comprise, in addition to air, carbon dioxide or nitrogen, or a mixture thereof; and the inerting agent comprises nitrogen.

In some embodiments, the cooling agent can conveniently consist of combustion fumes coming from another source with an almost stoichiometric combustor, so as to already naturally consist of only CO₂ and N₂, with a low percentage of residual O₂.

In accordance with another aspect of the present invention, the smelting furnace is preferably of the fixed type (not oscillating), and it is closed so as to prevent the entry of air from the outside, limiting oxidative phenomena and thus promoting the reduction of by-products. Such smelting furnace has a smelting chamber inside it with a determinate controlled internal pressure, for example in a range from -5 to +10 mm H₂O and preferably from 0 to +2 mm H₂O as a function of the quantity of gas developed.

In some embodiments, the smelting furnace can comprise at least a lower part made of refractory material and provided with a tapping hole configured to allow the extraction and discharge of liquid cast iron, and at least an upper part made of refractory material and provided with an extraction hole configured to allow the extraction and discharge of slag.

In this way, the metallurgical plant according to the embodiments described here allows to achieve the advantage of being able to produce cast iron, concentrate the Zn oxide in the fumes and produce recyclable slag.

In accordance with another aspect of the present invention, respective granulation members are optionally associated with the smelting furnace, in correspondence with the tapping hole and the extraction hole, which are configured to granulate the liquid cast iron and slag.

In accordance with another aspect of the present invention, the treatment apparatus is provided with a control system which comprises a central control unit and a plurality of temperature detectors disposed in the combustion chamber and along the treatment duct of the fumes. The central control unit is also operatively connected to the injection means and at least to the first injectors. In particular, the control system is configured to control the various injections of the oxidizing agent and of the cooling agent, so as to optimize the oxidation of the zinc and regulate the temperature of the combustion fumes in the treatment duct.

Some embodiments also concern a method for treating by-products comprising powders deriving from the production of steel by means of an electric arc furnace (EAF) and containing zinc and iron oxides, and possibly with added further iron oxides in the form of slag originating from rolling, in a metallurgical plant having at least one smelting furnace able to reduce and smelt reducible metal oxides present in the by-products and to generate consequent metal vapors and combustible gases which define fumes, and a treatment apparatus associated with the smelting furnace to treat the fumes, in particular the metal vapors and the unburned gasses, exiting from the smelting furnace.

In particular, the method according to the embodiments described here comprises a feeding step in which the by-products are fed into the smelting furnace, a reduction and smelting step in which the by-products are reduced and smelted in the smelting furnace, in particular they are chemically reduced with a reduction agent containing carbon, generating the fumes which are conveyed toward the treatment apparatus.

As an alternative to, or in combination with, the carbon, aluminum and/or silicon can be added to the bath, that is, to the molten metal charge, which through metallothermic reactions react with the metal oxides, such as FeₓO_{y}, ZnO, MnO, SiO₂, Cr₂O₃ and others, sequestering the oxygen and releasing further energy useful for the smelting and thus allowing a partial saving of electrical energy. After these reactions, the aluminum and/or silicon are transformed into the corresponding oxides Al₂O₃ and SiO₂, and, together with the other pre-existing oxides, form the slag.

An extraction step follows, in which a plurality of injection means, present in the treatment apparatus and associated with the combustion chamber and with the treatment duct, respectively, inject at least one oxidizing agent into the fumes to oxidize the zinc contained therein so as to extract it, at least partly, in the form of zinc oxide deposits and complete the oxidation of all the gasses present before being sent to the filtration apparatus, where the remaining zinc oxide is filtered, and to the flue.

In accordance with another aspect of the present invention, the extraction step comprises:
a first oxidation step in which first injection means, associated with the combustion chamber, inject a first quantity of the oxidizing agent into the fumes to generate first zinc oxide deposits and oxidize part of the carbon monoxide generated in the smelting furnace; and
a second oxidation step in which second injection means, associated with the treatment duct in proximity to an upper part of the combustion chamber, inject a second quantity of the oxidizing agent into the fumes, possibly different from the first quantity, to generate second zinc oxide deposits and continue the oxidation of carbon monoxide.

Moreover, the extraction step also comprises a third oxidation step in which accessory injection means, disposed along the treatment duct, inject further quantities of oxidizing agent, possibly different from the first and second quantity, into the fumes to generate further zinc oxide deposits and complete the oxidation of carbon monoxide.

After completing the oxidation of all the species contained in them in the extraction step as above, the fumes are, therefore, combustion fumes, which are cooled and sent to the filtration apparatus.

In accordance with another aspect of the present invention, in the oxidation steps as above the zinc oxide deposits can be deposited downward and can then be collected in suitable collection members disposed below the combustion chamber and along the treatment duct, below the accessory injection means.

Moreover, in some embodiments there can be provided a filtration step in which the remaining zinc oxide present in the combustion fumes is filtered by suitable filtration apparatuses, downstream of the extraction step as described above.

In accordance with another aspect of the present invention, during the reduction and smelting step as above, both liquid cast iron as well as slag are produced, which are advantageously recyclable.

The liquid cast iron is extracted from a tapping hole of the smelting furnace and possibly discharged into a respective granulation member; moreover, the slag is extracted from a corresponding extraction hole of the smelting furnace and possibly discharged into a respective granulation member or into a box.

Other embodiments concern an assembly for the production of steel comprising an electric arc furnace (EAF) for the production of steel, typically starting from scrap possibly with pre-reduced iron, and a metallurgical plant in accordance with the present description for treating steelworks by-products, comprising powders deriving from the production of steel by means of an electric arc furnace (EAF) and containing zinc (Zn) and iron (Fe) oxides.

Other embodiments concern a method for producing steel comprising:
i) producing steel by means of an electric arc furnace (EAF), typically starting from scrap possibly with pre-reduced iron;
ii) treating by-products comprising powders deriving from the steel production and containing zinc (Zn) and iron (Fe) oxides by means of a method in accordance with the present description, recovering on the one hand liquid cast iron which can be recycled in the EAF for the production of steel (in step i) and liquid slag which can advantageously be recycled in other industrial processes, and on the other hand zinc in the form of zinc oxide.

Favorably, the by-products deriving from the production of steel in the electric arc furnace, once advantageously subjected to agglomeration, are fed from the electric arc furnace (EAF) for the production of steel, to the smelting furnace of the metallurgical plant described here, and then subjected to treatment according to the present invention.

### DESCRIPTION OF THE DRAWINGS

These and other aspects, characteristics and advantages of the present invention will become apparent from the following description of some embodiments, given as a non-restrictive example with reference to the attached drawings wherein:
- fig. 1 is a schematic and simplified representation of a metallurgical plant according to the present invention;
- fig. 2 is a schematic representation of an apparatus for treating fumes of the metallurgical plant of fig. 1 in accordance with a first embodiment;
- fig. 3 is a schematic representation of an apparatus for treating fumes of the metallurgical plant of fig. 1 in accordance with another embodiment;
- fig. 4 is a perspective view of an enlarged detail of the apparatus of fig. 2.

We must clarify that in the present description the phraseology and terminology used, as well as the figures in the attached drawings also as described, have the sole function of better illustrating and explaining the present invention, their function being to provide a non-limiting example of the invention itself, since the scope of protection is defined by the claims.

To facilitate comprehension, the same reference numbers have been used, where possible, to identify identical common elements in the drawings. It is understood that elements and characteristics of one embodiment can be conveniently combined or incorporated into other embodiments without further clarifications.

### DESCRIPTION OF SOME EMBODIMENTS

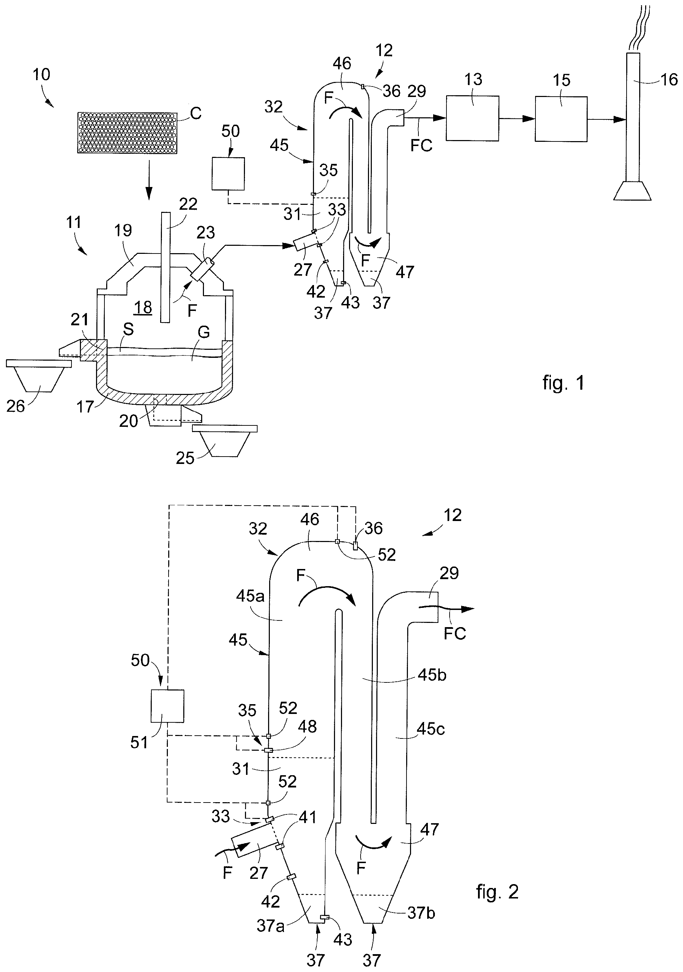

With reference to fig. 1, the embodiments described here concern a metallurgical plant 10 which is configured and usable for the treatment of steelworks by-products, comprising powders deriving from the production of steel by means of an electric arc furnace (EAF) typically starting from scrap and possibly with pre-reduced iron.

In particular, the by-products preferably comprise both powders containing a plurality of metal oxides in fine particles, each with a different percentage by weight in relation to the type of metal charge used, and also mill scale consisting mainly of iron oxides. Specifically, the metals having the highest percentage by weight in such powdered oxide mixtures are Fe and Zn. In particular, the powders typically contain zinc (Zn) and iron (Fe) oxides and possibly additions of further iron oxides, in the form of mill scale.

The metallurgical plant 10 is used to treat the by-products thus defined, in order to recover, or extract, from them, in particular from the metal oxides present in the powders, mainly iron (Fe) and zinc (Zn), the latter in the form of zinc oxide (ZnO), as will be described in detail below.

The metallurgical plant 10 comprises in sequence, along a processing path (from left to right in fig. 1), a smelting furnace 11 and an apparatus 12 described below.

The melting furnace 11 is also called "smelting" furnace due to the affinity with the metallurgical process according to which cast iron is obtained from a metal ore. This smelting furnace 11 must not be confused here with the actual electric arc furnace (EAF) used for the production of steel and from which the steelworks by-products typically derive.

Reducible metal oxides present in the by-products coming from the electric arc furnace (EAF) are fed, reduced and melted in the smelting furnace 11, generating consequent fumes, defined here as fumes F in order to distinguish them from the combustion fumes FC which will be described below.

The metallurgical plant 10 also comprises the apparatus 12 which is associated, preferably in a hermetic manner, with an outlet hole of the smelting furnace 11 and is able to treat the fumes F, as will be described in greater detail below.

Moreover, in possible embodiments the metallurgical plant 10 can comprise one or more filtration apparatuses 13 connected to the apparatus 12, and possibly at least one possible apparatus 15 for separating carbon dioxide (CO₂), disposed downstream of the filtration apparatuses 13 and connected to a flue 16.

In accordance with possible embodiments, the smelting furnace 11 is preferably of the electric arc type (EAF) and preferably powered with direct current (DC) so as to ensure adequate stirring of the molten material inside it, which typically consists of liquid cast iron G and slag S deriving from the reduction and smelting of the reducible oxides of the by-products.

Alternatively, according to other embodiments not shown in the drawings, the smelting furnace 11 can be powered with alternating current (AC) and provided with a bottom stirrer, also known to the people of skill in the art with the English term "stirrer".

In some embodiments, the smelting furnace 11 comprises a substantially cylindrical-shaped container provided with a lower part, or shell, 17 made of a refractory material, and a cover, or crown, 19. The smelting furnace 11 is, during use, closed hermetically to prevent the entry of air from the outside, limiting oxidative phenomena. The feed to the smelting furnace 11, indicated schematically and by way of example with reference C in fig. 1, can occur, for example favorably continuously, for example by means of a belt provided with a suitable fluid-dynamic barrier in order to prevent the entry of air into the furnace 11. The process therefore does not provide to open the crown 19.

In particular, the smelting furnace 11 is advantageously and preferably of the fixed type, that is, it cannot be tilted, for example to carry out the tapping operation, and it is substantially of the closed type, again to prevent the entry of air from the outside: it contains inside a smelting chamber 18 in which during operations a certain controlled internal pressure is maintained (for example from -5 to +10 mm H₂O), which can favorably be a slight overpressure (for example from 0 to +2 mm H₂O). This controlled internal pressure allows to remove the fumes F which develop inside the smelting furnace 11 from the melting of the material and to prevent the uncontrolled entry of air from the outside.

The shell 17 of the smelting furnace 11 is provided with a tapping hole 20 and an extraction hole 21, which can be opened selectively and have the function of discharging the liquid cast iron G and the slag S, respectively, which are present inside the smelting furnace 11. In this way, it is possible to recover the liquid cast iron G, which can be recycled in the steelworks, and the inert slag S, which can be recycled in other industrial productions.

The crown 19 of the smelting furnace 11 is provided with one or more apertures, called "pits", through which respective electrodes 22 are inserted to determine the development of the electric arc and thus allow the melting of the material introduced into the smelting furnace 11. In the preferential case of a DC furnace there will be one or two the electrodes, in the case of an AC furnace there will be at least three.

Furthermore, in the crown 19 there is a further hole to which a suction duct 23 for drawing the fumes F present in the smelting chamber 18 is connected, which are then conveyed toward the treatment apparatus 12 in an appropriate manner. As mentioned, there is also an aperture, provided with a fluid-dynamic barrier, for the continuous feed of the materials, for example by means of a belt, as schematically indicated by reference C in fig. 1.

Moreover, in the embodiment provided here by way of example, the smelting furnace 11 is designed to generate a specific power, with respect to the surface area of the bath, between about 300 kW/m² and about 1,000 kW/m², which is optimized to melt the by-products in question that are fed into it. This power can be transferred to the bath, that is, to the molten metal charge, by the electrode(s) 22 alone, or by combining them with chemical energy deriving from the introduction of aluminum and/or silicon into the bath, which by reacting with the metal oxides (FeₓO_{y}, ZnO, MnO, SiO₂, Cr₂O₃, and others) give rise to exothermic reduction reactions.

In accordance with one aspect of the present invention, with the smelting furnace 11 there can be associated, for example in proximity to the tapping hole 20 and the extraction hole 21, respective granulation members 25 and 26 configured to possibly granulate the liquid cast iron G and the slag S, respectively, in order to facilitate the recovery of liquid cast iron G and slag S.

In accordance with one aspect of the present invention, the apparatus 12 is of the static type and is configured to treat the fumes F exiting from the smelting furnace 11 in order to extract, or recover, at least part of the gaseous Zn present therein, in the form of solid ZnO deposits. As mentioned, the remaining zinc oxide can be filtered by means of one or more filtration apparatuses 13 downstream of the apparatus 12.

In particular, the apparatus 12 can comprise an inlet duct 27 in fluid-dynamic connection with the suction duct 23 and through which the fumes F coming from the smelting furnace 11 are introduced. For example, these fumes F preferably have a temperature of approximately 1,300°C, a concentration of carbon monoxide (CO) equal to approximately 80% of the total gaseous volume, and a concentration of Zn in gaseous form equal to approximately 10% of the total gaseous volume. The apparatus 12 also comprises an outlet duct 29 from which combustion fumes FC, defined hereafter, exit.

Advantageously, both the oxidation of the Zn and the carbon monoxide CO present in the fumes F, and also the cooling of the latter to bring them to a temperature suitable to make them pass through the filtration apparatuses 13 located adjacent to the outlet duct 29, without these being damaged, are carried out inside the apparatus 12.

In accordance with one aspect of the present invention, the apparatus 12 comprises static means for extracting and separating the gaseous zinc Zn present in the fumes F, in the form of ZnO deposits.

In particular, the static extraction and separation means comprise at least one combustion chamber 31 able to receive the fumes F coming from the smelting furnace 11, the combustion chamber 31 being in particular connected to the inlet duct 27, a treatment duct 32 in fluid-dynamic connection with the combustion chamber 31, and a plurality of injection means 33, 35 and 36 which are associated with the combustion chamber 31 and with the treatment duct 32, respectively, which are configured to inject at least one oxidizing agent into the fumes F to oxidize the Zn contained therein in order to extract it in the form of ZnO deposits and to complete the oxidation of carbon monoxide CO to carbon dioxide CO₂.

In accordance with another aspect of the present invention, the injection means 33, 35, 36 can be installed at least in the combustion chamber 31 and also in the treatment duct 32.

The injection means 33, 35, 36 can for example be or include fluid injection ducts, injectors, injection nozzles or similar injection devices.

In particular, in the embodiment described here, the injection means comprise: first injection means 33 associated with the combustion chamber 31 and configured to inject a first quantity of oxidizing agent into the fumes F; and
second injection means 35 associated with the treatment duct 32 in proximity to an upper, or top, zone 39 of the combustion chamber 31 and configured to inject a second quantity of oxidizing agent, possibly different from the first quantity, into the fumes F.

In accordance with preferred embodiments, accessory injection means 36 are also provided, disposed along the treatment duct 32 and configured to inject further quantities of oxidizing agent, possibly different from the first and second quantity, into the fumes F, in order to transform them into combustion fumes FC to be sent to the one or more filtration apparatuses 13 disposed downstream of the apparatus 12.

Such one or more filtration apparatuses 13 are configured to receive combustion fumes FC coming from the apparatus 12, to filter ZnO remaining in the combustion fumes FC.

The oxidizing agent can preferably comprise air, oxygen (O₂), or enriched air. The oxidizing agent injected through the accessory injection means 36 can also act as a cooling agent to control the temperature of the gas to the filtration apparatuses 13.

The feed of the oxidizing agent inside the apparatus 12 is advantageously fractioned so as to prevent localized overheating, in particular along the treatment duct 32. For this reason, the injection means 33, 35 and 36 are favorably located at different points of the apparatus 12.

Advantageously, the combustion chamber 31 of the apparatus 12 is made of refractory material, preferably it is water-cooled and comprises the upper zone 39 with which the treatment duct 32 is associated in a fluid-dynamic manner, and a lower or bottom zone 40 below which, for example, a respective collection member 37 can be disposed, which, for example, comprises, or consists of, a first collection hopper 37a.

The first injection means 33, associated with the combustion chamber 31, comprise a plurality of injection nozzles 41 which are disposed perimetrically at the outlet end of the inlet duct 27. In particular, the first quantity of oxidizing agent injected by the injection nozzles 41, also defined "primary air", has the function of developing one or more flames inside the combustion chamber 31, which cause the combustion of the fumes F and consequently a first oxidation of the gaseous Zn, which, by oxidizing, generates solid accumulations of zinc oxide (ZnO) which are partly deposited in the first hopper 37a and are partly dragged by the gas toward collection points further downstream along the treatment duct 32. Advantageously, the zinc oxide can be filtered, downstream of the apparatus 12, by the one or more filtration apparatuses 13 as described above.

Moreover, the first injection means 33 can possibly have the function of also injecting, in combination with the oxidizing agent, a certain quantity of water (H₂O), for example equal to about 5% of the quantity of oxidizing agent injected, in order to enhance the cooling of the fumes F. Specifically, the injection of water is useful for managing the exothermic reaction of the combustion, keeping the development of heat under control.

In the example given here, there are six nozzles 41, but it is clear that in other embodiments, not shown in the drawings, the number of nozzles 41 can be different, for example two, three, four, five or even more than six.

In accordance with possible embodiments, the nozzles 41 are configured to generate substantially linear jets. Alternatively, according to other embodiments, the nozzles 41 are configured to generate swirling jets which then propagate inside the fumes F.

In proximity to the lower zone 40 of the combustion chamber 31 of the apparatus 12 there can be first injectors 42, for example comprising one or more nozzles configured to inject a cooling agent into the fumes F in order to attenuate, or limit, the rise of the temperature during the combustion of the latter. Furthermore, the cooling agent also has the function of reducing the Zn oxidation reaction rate so as to prevent localized overheating, while still maintaining a high flow of the fumes F. The cooling agent can, for example, be air or carbon dioxide (CO₂), or nitrogen (N₂) or a mixture thereof.

According to possible embodiments, second injectors 43 can be associated in correspondence with the first hopper 37a which comprise one or more nozzles of a known type and configured to inject an inerting agent, such as nitrogen (N₂) for example, on the ZnO deposits present therein, in order to prevent local overheating and leaks of fuel gas at the same time as the extraction of the product.

The treatment duct 32 can advantageously have a coiled shape and, in particular, comprises at least three segments 45, preferably vertical and close to each other, advantageously consecutive to each other, which are connected at the top by means of at least one upper part 46 in the shape of a loop and at the bottom by means of at least one lower part 47. Moreover, as can be seen in figs. 1, 2 and 3, in correspondence with at least one lower part 47 there can be a respective collection member, or hopper, 37.

Alternatively, each collection member 37 can perform the function of a connection loop between two adjacent segments 45.

Please note that in the treatment duct 32, thanks to the fact that it is made with a coiled shape, the fumes F travel along the segments 45 starting from the bottom upward (ascending direction in the segment 45a) and then inverting their direction with every loop.

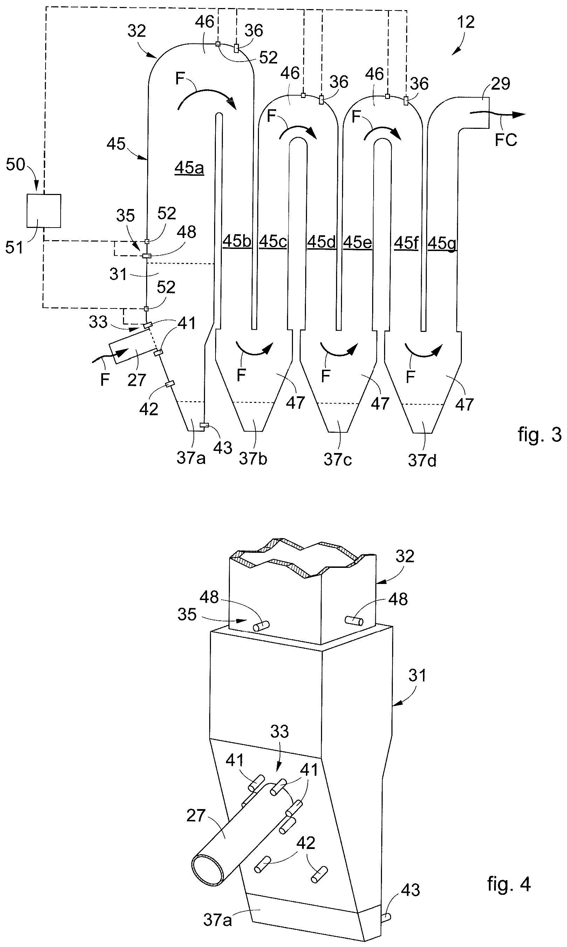

The second injection means 35 can comprise two or more nozzles 48 (fig. 4) disposed above the upper zone 39 of the combustion chamber 31 and perpendicular with respect to the flow of the fumes F and substantially equidistant from each other. In particular, by injecting, through the nozzles 48, the second quantity of oxidizing agent, also defined as "secondary air", into the fumes F, a second oxidation of the gaseous Zn is obtained, so as to generate further deposits of ZnO, as will be described in detail below.

The auxiliary injection means 36 can be associated in proximity to the upper loops 47, preferably in correspondence with the segments 45 in which the fumes F have a descending flow. In particular, the accessory injection means 36 comprise one or more injection nozzles able to inject further quantities of oxidizing agent into the fumes F, also defined as "accessory air", and thus cause further oxidations of the Zn along the treatment duct 32 in order to transform the fumes F into combustion fumes FC. Moreover, the injections of oxidizing agent performed by the accessory injection means 36 also allow to cool the fumes F, so that the combustion fumes FC exiting through the outlet duct 29 have a suitable temperature, and to manage the fluid-dynamics thereof.

In the embodiments described using figs. 1 and 2, there are three segments 45, respectively a first ascending segment 45a (fig. 2), that is, in which the direction of the fumes F is ascending, a second descending segment 45b, that is, in which the direction of the fumes F is descending, and a third ascending vertical segment 45c; moreover, in correspondence with the lower part 47 there is a second hopper 37b.

In accordance with another embodiment, described using fig. 3, there are seven segments 45, respectively from a first to a seventh segment 45a-45g, and in correspondence with the lower loops 47 there are also a second, a third and a fourth hopper 37b, 37c and 37d, respectively.

It is clear that in other embodiments, not shown in the drawings, the segments 45 can be in a number other than 6, for example comprised between 4 and 6, or greater than 7.

Moreover, preferably, the first segment 45a has a cross-section greater than those of the remaining segments 45, so as to slow down the speed of the fumes F exiting from the inlet duct 27, thus facilitating the deposit of the ZnO accumulations. Furthermore, inside the first hopper 37a, the first segment 45a and, consequently, also the second segment 45b have a greater length than that of the remaining segments, for example from 45c to 45g. In particular, the greater height of the first segment 45a is able to promote combustion, in particular upstream of the first loop-shaped upper part 46.

In accordance with possible embodiments, preferably at least the first two segments 45a and 45b are water-cooled, while the remaining segments 45 are air-cooled.

In addition, inside or below the second hopper 37b, and possibly also inside or below the subsequent hoppers 37c and 37d, if present, there can be disposed one or more crushing members 49, capable of crushing the ZnO deposits. In fact, the disposition of the crushing members 49 can be very useful since the Zn, traveling along the first and second segment 45a and 45b, could aggregate into more voluminous accumulations and in particular create zones of stagnation in proximity to the walls.

In some embodiments, the treatment duct 32 can be sized in such a way as to have a cross-section such that it can be inspected easily and safely by an operator, with the metallurgical plant 10 not in operation, for possible cleaning procedures, during which it is also possible to remove any agglomerates, or accumulations, of ZnO which may have deposited or remained adhered to the internal walls of the treatment duct 32 itself. Moreover, a sufficiently wide cross-section advantageously allows both to prevent the formation of zones subject to strong impact of the temperature on the walls F, with the risk of dangerous temperature rises, and also to reduce to a minimum phenomena of adhesion of the ZnO on the internal walls of the treatment duct 32.

Moreover, the apparatus 12 can be provided with a control system 50 (fig. 1) which comprises a central control unit 51 and a plurality of temperature detectors 52 disposed in the combustion chamber 31 and along the treatment duct 32. The central control unit 51 is also operatively connected to the injection means 33, 35, 36 and at least to the first injectors 42.

In particular, the control system 50 is configured and programmed to control the different injections of the oxidizing agent and those of the cooling agent, so as to optimize the oxidation of the Zn and of the CO and regulate the temperature of the fumes F in the treatment duct 32, so that in correspondence with the outlet duct 29 the combustion fumes FC have a temperature such as not to damage the filtration apparatuses 13 disposed downstream.

The filtration apparatuses 13 are configured to filter and separate the powders, rich in ZnO, transported in the combustion fumes FC exiting from the apparatus 12 and, for example, they comprise bag filters provided with active catalyst elements, which allow to destroy any organic micro-pollutants, such as dioxins for example, as will be described in detail below. We must clarify that the control of the temperature of the combustion fumes FC exiting the apparatus 12 is very important, since at temperatures lower than about 200-280°C the reaction with the catalyst elements does not occur, while higher temperatures can damage the filters themselves.

The separation apparatus 15, for separating the CO₂ from the fumes exiting from the filtration apparatus 13, is substantially of a known type and therefore is not described in detail.

The operation of the metallurgical plant 10 described heretofore, which corresponds to the metallurgical method according to the present invention, comprises the following steps.

Optionally, a preliminary step can be carried out, which is useful but not essential for the present invention, during which a treatment of the by-products takes place, before they are fed into the smelting furnace 11 together with the mill scale.

This preliminary step can advantageously provide that the powders containing metal oxides deriving from other steelworks processes are agglomerated and compacted by means of an agglomeration operation, for example briquetting, which is per se known.

The briquetting operation, or equivalent agglomeration operation, allows to form a plurality of agglomerates, also called "briquettes", jointly feeding into the metal powders also a quantity of carbon necessary to then generate a reduction reaction of the reducible metal oxides and a better contact of the reactants when they are introduced into the smelting furnace 11. Alternatively, in order to agglomerate and compact these metal powders it is possible to use a pelletizing operation, also known per se.

Optionally, the briquettes can also be treated with a suitable binder, for example starch or lignin, able to provide mechanical properties such as to limit the formation of fine particles during their movement. This can help to obtain a high yield of the metallurgical plant 10, allowing to optimize the recovery of Fe and ZnO.

The possible preliminary step described above is followed by a feeding step, in which the by-products, for example defined by the briquettes and the mill scale, are fed into the smelting furnace 11 in order to be reduced and smelted.

A reduction and smelting step then follows, in which the by-products are smelted, producing a bath of liquid cast iron G and liquid slag S. Moreover, the smelting of the material generates consequent metal vapors and combustible gases, collectively called fumes F, which propagate above the bath of liquid cast iron G and which are transferred to the apparatus 12, for example being drawn by a fan located after the filters, ensuring however the maintenance of a desired and controlled pressure inside the furnace, for example from -5 to +10 mm of H₂O, favorably a slight overpressure of 0-2 mm of H₂O.

During the reduction and smelting step, the liquid cast iron G and the slag S are extracted through the tapping hole 20 and the extraction hole 21, respectively, without tilting the smelting furnace 11. Optionally, the slag S extracted through the extraction hole 21 can be granulated.

The slag S has a composition very similar to that of blast furnace slag and therefore is advantageously recyclable and can be used for the production of clinker, which is normally obtained from natural mixtures and blast furnace slag.

During the reduction and smelting step inside the smelting furnace 11, which can take place substantially in a continuous cycle, the fumes F directed into the suction duct 23 are conveyed toward the inlet duct 27 of the apparatus 12 for the extraction and separation of Zn, in the form of zinc oxide (ZnO) and other volatile metals.

In a subsequent extraction step, the control system 50 controls and coordinates the operation of the apparatus 12.

In order to better understand the phenomena that occur inside the apparatus 12, we wish to highlight that the following chemical reactions typically take place during the extraction step:
(a) Zinc oxidation: Zn(g) + ½ O₂ → ZnO
(b) CO₂ injection: Zn(g) + CO₂ → ZnO + CO
(c) Water injection: Zn(g) + H₂O → ZnO + H₂
(d) Formation of carbon dioxide: CO + ½ O₂ → CO₂
(e) Formation of water/water vapor: H₂ + ½ O₂ → H₂O

These reactions develop considerable energy, therefore advantageously the injection of an oxidizing agent into the fumes F is fractioned so as to prevent localized overheating.

Please note that metallic Zn and CO develop inside the smelting furnace 11 following the reduction reactions of the oxides fed with carbon.

In a first oxidation step, the fumes F exit from the inlet duct 27 at a temperature of about 1,300°C and are drawn into the combustion chamber 31. Subsequently, the first injection means 33, that is, the nozzles 41, inject a first quantity of oxidizing agent into the fumes F which generates one or more flames and, therefore, cause the partial combustion of the fumes themselves. In order to control the temperature, in combination with the oxidizing agent, water can possibly also be used in a percentage equal to about 5% of the quantity of oxidizing agent injected. The first injection of oxidizing agent causes a first oxidation of the gaseous Zn present in the fumes F, which, by oxidizing, creates first solid accumulations, or deposits, of ZnO which are partly deposited in the first collection hopper 37a below and are partly dragged by the gas.

In order to control the temperature of the fumes F, a cooling agent is injected in correspondence with the combustion chamber 31 by means of the first injectors 42. Furthermore, an inerting agent can be injected into the first hopper 37a, by means of the second injectors 43, which allows to prevent localized overheating in the ZnO deposits and the escape of unburned gases during the extraction of the product.

Please note that during the combustion of the fumes F, the formation of carbon dioxide and/or water vapor can occur.

After the first oxidation, in a second oxidation step, the fumes F that exit from the combustion chamber 31 and enter the treatment duct 32 are subjected to a second jet of oxidizing agent. Specifically, the second injection means 35, that is, the nozzles 48, inject a second quantity of oxidizing agent into the fumes F which causes the oxidation of the residual metallic Zn and the oxidation of CO and, therefore, second ZnO deposits which can deposit in the first collection hopper 37a below or can be dragged by the gas toward the subsequent hoppers 37b, 37c and 37d, and possibly in part up to the filtration apparatus 13.

Subsequently, a third oxidation step is provided, which can comprise one or more secondary, or accessory, oxidation sub-steps in which, in correspondence with the loop-shaped upper parts 46 of the treatment duct 32, the accessory injection means 36 inject a certain quantity of oxidizing agent which causes the oxidation of the Zn and of the CO in order to generate further deposits of zinc oxide, which are deposited in the corresponding hoppers 37b, and possibly 37c and 37d, if present. The oxidizing agent injected into the loop-shaped upper parts 46 also has the function of cooling fluid for the combustion fumes FC at exit from the outlet duct 29 before being sent to the filtration apparatuses 13.

By way of example, depending on the specific operating requirements and/or on the possible embodiments of the present invention, the overall quantity of oxidizing agent injected into the fumes is fractioned and regulated by the control system 50 as follows:
- the first injection means 33 inject between about 20% and about 30% of the total quantity of oxidizing agent at once;
- the second injection means 35 inject between about 30% and about 50% of the total quantity of oxidizing agent at once;
- the accessory injection means 36 inject between about 20% and about 40% of the total quantity of oxidizing agent, possibly deferred over several instances in relation to the disposition and number of accessory injection means 36 present along the treatment duct 32.

The apparatus 12, thanks to its structural configuration and to the fractioned injections of oxidizing agent, is advantageously able to recover a high quantity of Zn, in the form of ZnO, from the combustion fumes FC and to carry out the total combustion of CO to CO₂ for its eventual capture.

Moreover, the fractioned injections of the oxidizing agent performed under the control of the control system 50 also allow to regulate the temperature of the fumes inside the treatment duct 32, so that in correspondence with the outlet duct 29 the combustion fumes FC have a temperature such as not to damage the filtration apparatuses 13 disposed downstream, that is, favorably lower than about 280°C.

In fact, once a part of the Zn has been extracted by means of the apparatus 12 (in the form of zinc oxide), the combustion fumes FC are conveyed toward the filtration apparatuses 13 for a subsequent step of filtering the remaining quantities of ZnO. In particular, in this filtration step the combustion fumes FC pass through, for example, the bag filters present in the filtration apparatuses 13 and thanks to the presence of the active catalyst elements mentioned above, the dioxins and other organic micro-pollutants possibly present in the combustion fumes FC are disintegrated into very small molecules harmless to health, thus avoiding the addition of adsorbent agents which could negatively affect the quality of the powders produced, as well as increasing the cost of the entire method.

Once filtered, in a subsequent separation step, the combustion fumes FC are optionally directed toward the separation apparatus 15 to separate the CO₂ present in them.

Finally, in an emission step, the treated combustion fumes FC are released into the atmosphere through the flue 16.

It is clear that modifications and/or additions of parts and/or steps may be made to the metallurgical plant 10 and to the method as described heretofore, without departing from the field and scope of the present invention, as defined by the claims.

It is also clear that, although the present invention has been described with reference to some specific examples, a person of skill in the art shall be able to achieve other equivalent forms of plants and methods, having the characteristics as set forth in the claims and hence all coming within the field of protection defined thereby.

In the following claims, the sole purpose of the references in brackets is to facilitate their reading and they must not be considered as restrictive factors with regard to the field of protection defined by the claims.

## Claims

1. Metallurgical plant (10) for treating steelworks by-products, comprising powders deriving from the production of steel by means of an electric arc furnace (EAF) and containing zinc (Zn) and iron (Fe) oxides, said metallurgical plant (10) comprising:
- at least one smelting furnace (11) configured to reduce and smelt reducible metal oxides present in said by-products and generate consequent metal vapors and combustible gases which are defined fumes (F);
- an apparatus (12) associated with said smelting furnace (11) and able to treat said fumes (F), **characterized in that** said apparatus (12) is provided with static means for extracting and separating zinc oxide (ZnO) from said fumes (F), comprising:
at least one combustion chamber (31) able to receive the fumes (F) coming from said smelting furnace (11);
a treatment duct (32) in fluid-dynamic connection with said combustion chamber (31);
a plurality of injection means (33, 35, 36) associated with said combustion chamber (31) and with said treatment duct (32), respectively, which are configured to inject at least one oxidizing agent into said fumes (F) to oxidize the zinc (Zn) contained therein in order to extract it in the form of zinc oxide (ZnO) deposits and for the oxidation of carbon monoxide (CO) present in said fumes (F), wherein said injection means comprise:
first injection means (33) associated with said combustion chamber (31) and configured to inject a first quantity of said oxidizing agent into said fumes (F); and
second injection means (35) associated with said treatment duct (32) in proximity to an upper zone (39) of said combustion chamber (31) and configured to inject a second quantity of said oxidizing agent into said fumes (F).

2. Metallurgical plant (10) as in claim 1, **characterized in that** said injection means also comprise accessory injection means (36) disposed along said treatment duct (32) and configured to inject further quantities of said oxidizing agent into said fumes (F) in order to transform them into combustion fumes (FC) to be sent to a filtration apparatus (13).

3. Metallurgical plant (10) as in claim 2, **characterized in that** said treatment duct (32) has a coiled shape and comprises at least three essentially vertical segments (45), which are connected at the top by means of at least one upper part (46) in the shape of a loop and at the bottom by means of at least one lower part (47), **in that** under said combustion chamber (31) and in correspondence with said at least one lower part (47) there are disposed respective collection members (37; 37a, 37b, 37c) to collect said zinc oxide deposits, **and in that** said accessory injection means (36) are disposed in correspondence with said at least one upper part (46).

4. Metallurgical plant (10) as in claim 3, **characterized in that** said apparatus (12) also comprises both first additional injectors (42) associated with said combustion chamber (31) and configured to inject a cooling agent into said fumes (F), and also second additional injectors (43) associated with a first (37a) of said collection members and configured to inject an inerting agent into said zinc oxide deposits present in said first collection member (37a).

5. Metallurgical plant (10) as in any claim hereinbefore, **characterized in that** said smelting furnace (11) is of the fixed and closed type and having inside it a smelting chamber (18) with a determinate controlled internal pressure, said smelting furnace (11) comprising at least a lower part (17) made of refractory material and provided with a tapping hole (20) configured to allow the extraction and discharge of liquid cast iron (G), and an extraction hole (21) configured to allow the extraction and discharge of slag (S).

6. Metallurgical plant (10) as in claim 5, **characterized in that** respective granulation members (25, 26) are optionally associated with said smelting furnace (11), in correspondence with said tapping hole (20) and said extraction hole (21).

7. Metallurgical plant (10) as in any claim from 1 to 6, **characterized in that** it comprises one or more filtration apparatuses (13) disposed downstream of said apparatus (12) and configured to receive combustion fumes (FC) coming from said apparatus (12) in order to filter ZnO remaining in said combustion fumes (FC).

8. Apparatus (12) for treating fumes (F) generated in a smelting furnace (11) of a metallurgical plant (10), **characterized in that** said apparatus (12) is provided with static means for extracting and separating zinc oxide (ZnO) from said fumes (F), comprising at least one combustion chamber (31) able to receive the fumes (F) coming from said smelting furnace (11), a treatment duct (32) in fluid-dynamic connection with said combustion chamber (31), and a plurality of injection means (33, 35, 36) associated with said combustion chamber (31) and with said treatment duct (32), respectively, which are configured to inject at least one oxidizing agent into said fumes (F) to oxidize the zinc (Zn) contained therein and recover it in the form of zinc oxide (ZnO) deposits, wherein said injection means comprise:
first injection means (33) associated with said combustion chamber (31) and configured to inject a first quantity of said oxidizing agent into said fumes (F); and
second injection means (35) associated with said treatment duct (32) in proximity to an upper part of said combustion chamber (31) and configured to inject a second quantity of said oxidizing agent into said fumes (F).

9. Apparatus (12) as in claim 8, **characterized in that** said injection means also comprise accessory injection means (36) disposed along said treatment duct (32) and configured to inject further quantities of said oxidizing agent into said combustion fumes (F) to transform them into combustion fumes (FC) to be sent to a filtration apparatus (13).

10. Apparatus (12) as in claim 9, **characterized in that** said treatment duct (32) has a coiled shape and comprises at least three essentially vertical segments (45), which are connected at the top by means of at least one upper part (46) in the shape of a loop and at the bottom by means of at least one lower part (47), **in that** under said combustion chamber (31) and in correspondence with said at least one lower part (47) there are disposed respective collection members (37; 37a, 37b, 37c) to collect said zinc oxide deposits, **and in that** said accessory injection means (36) are disposed in correspondence with said at least one upper part (46).

11. Apparatus (12) as in any claim from 8 to 10, **characterized in that** it also comprises both first additional injectors (42) associated with said combustion chamber (31) and configured to inject a cooling agent into said fumes (F), and also second additional injectors (43) associated with a first (37a) of said collection members and configured to inject an inerting agent into said zinc oxide deposits present in said first collection member (37a).

12. Method for treating by-products comprising powders deriving from the production of steel by means of an electric arc furnace (EAF) and containing zinc (Zn) and iron (Fe) oxides,
said method using a metallurgical plant (10) having at least one smelting furnace (11) able to reduce and smelt reducible metal oxides present in said by-products and to generate consequent metal vapors and combustible gases which define fumes (F), and an apparatus (12) associated with said smelting furnace (11) and able to treat said fumes (F) exiting from said smelting furnace (11),
said method comprising at least one feeding step in which said by-products are fed into said smelting furnace (11), and a reduction and smelting step in which said by-products are reduced and smelted in said smelting furnace (11), consequently generating said fumes (F) which are conveyed toward said apparatus (12),
said method being **characterized in that** it also comprises an extraction step in which a plurality of injection means (33, 35, 36), present in said apparatus (12) and associated with said combustion chamber (31) and with said treatment duct (32), respectively, inject at least one oxidizing agent into said fumes (F) to oxidize the zinc contained therein and extract it in the form of zinc oxide (ZnO) deposits, said extraction step comprising:
a first oxidation step in which first injection means (33), disposed inside said combustion chamber (31), inject a first quantity of said oxidizing agent into said fumes (F) to generate first zinc oxide deposits and oxidize part of the carbon monoxide (CO) generated in the smelting furnace (11), and
a second oxidation step in which second injection means (35), disposed above said combustion chamber (31), inject a second quantity of said oxidizing agent into said fumes (F) to generate second zinc oxide deposits and continue the oxidation of carbon monoxide (CO).

13. Method as in claim 12, **characterized in that** said extraction step also comprises a third oxidation step in which accessory injection means (36), disposed along said treatment duct (12), inject further quantities of oxidizing agent into said combustion fumes (FC) to generate further zinc oxide deposits and complete the oxidation of carbon monoxide (CO).

14. Method as in claim 13, **characterized in that** in said oxidation steps said zinc oxide deposits are deposited mainly downward and are then collected in suitable collection members (37) disposed below said combustion chamber (31) and along said treatment duct (32), below said accessory injection means (36).

15. Method as in claim 14, **characterized in that** during said step of reducing and smelting said by-products, both liquid cast iron (G) and also liquid slag (S) are produced, which are optionally sent to granulation members (25, 26).

16. Method as in any claim from 12 to 15, **characterized in that** said method comprises, after the extraction step, a filtration step in which said combustion fumes (FC) are conveyed toward one or more filtration apparatuses (13) for the filtration of remaining quantities of ZnO.

17. Assembly for the production of steel comprising an electric arc furnace (EAF) for producing steel and a metallurgical plant (10) as in any claim from 1 to 7.

18. Method for producing steel comprising:
i) producing steel by means of an electric arc furnace (EAF);
ii) treating by-products comprising powders deriving from said steel production and containing zinc (Zn) and iron (Fe) oxides by means of a method as in any claim from 12 to 16, recovering on the one hand liquid cast iron (G) which can be recycled in the steelworks in the steel production step i) and liquid slag (S) which can be used in other industrial productions, and on the other hand zinc in the form of zinc oxide (ZnO).

## Patentansprüche

1. Metallurgische Anlage (10) zur Behandlung von Stahlwerksnebenprodukten, umfassend Pulver, die aus der Herstellung von Stahl mittels eines Lichtbogenofens (EAF) stammen und Zink (Zn) sowie Eisen (Fe)-oxide enthalten, wobei besagte metallurgische Anlage (10) umfasst:
- mindestens einen Schmelzofen (11), der ausgelegt ist, um reduzierbare Metalloxide, die in besagten Nebenprodukten vorhanden sind, zu reduzieren und zu schmelzen und daraus resultierende Metalldämpfe und brennbare Gase zu erzeugen, die als Rauchgase (F) definiert sind;
- eine Vorrichtung (12), die dem Schmelzofen (11) zugeordnet ist und in der Lage ist, die Rauchgase (F) zu behandeln, **dadurch gekennzeichnet, dass** besagte Vorrichtung (12) mit statischen Mitteln zur Trennung und Abscheidung von Zinkoxid (ZnO) aus den Rauchgasen (F) versehen ist, umfassend:
mindestens eine Brennkammer (31), die die Rauchgase (F), die aus besagtem Schmelzofen (11) kommen, aufnehmen kann;
einen Behandlungskanal (32), der in fluid-dynamischer Verbindung mit besagter Brennkammer (31) steht;
eine Vielzahl von Injektionsmitteln (33, 35, 36), die jeweils besagter Brennkammer (31) und besagtem Behandlungskanal (32) zugeordnet sind, die konfiguriert sind, um mindestens ein Oxidationsmittel in besagte Rauchgase (F) zu injizieren, um das Zink (Zn), das darin enthalten ist, zu oxidieren, um es in der Form von Zinkoxid (ZnO)-Ablagerungen zu extrahieren, sowie zur Oxidation von Kohlenmonoxid (CO), das in besagten Rauchgasen (F) vorhanden ist, wobei besagte Injektionsmittel umfassen:
erste Injektionsmittel (33), die besagter Brennkammer (31) zugeordnet und konfiguriert sind, um eine erste Menge besagten Oxidationsmittels in besagte Rauchgase (F) zu injizieren; und zweite Injektionsmittel (35), die besagtem Behandlungskanal (32) in der Nähe eines oberen Bereichs (39) besagter Brennkammer (31) zugeordnet und konfiguriert sind, um eine zweite Menge besagten Oxidationsmittels in besagte Rauchgase (F) zu injizieren.

2. Metallurgische Anlage (10) wie in Anspruch 1, **dadurch gekennzeichnet, dass** besagte Injektionsmittel auch zusätzliche Injektionsmittel (36) umfassen, die entlang besagtem Behandlungskanal (32) angeordnet und konfiguriert sind, um weitere Mengen besagten Oxidationsmittels in besagte Rauchgase (F) einzuleiten, um sie in Verbrennungsgase (FC) umzuwandeln, um in eine Filtervorrichtung (13) geschickt zu werden.

3. Metallurgische Anlage (10) wie in Anspruch 2, **dadurch gekennzeichnet, dass** besagter Behandlungskanal (32) eine gewundene Form aufweist und mindestens drei im Wesentlichen vertikale Segmente (45) umfasst, die oben mittels mindestens eines oberen Teils (46) in der Form einer Schleife und unten mittels mindestens eines unteren Teils (47) verbunden sind, **dadurch, dass** unterhalb besagter Brennkammer (31) und in Übereinstimmung mit besagtem mindestens einen unteren Teil (47) jeweilige Auffangelemente (37; 37a, 37b, 37c) zum Auffangen besagter Zinkoxidablagerungen angeordnet sind, und **dadurch, dass** besagte zusätzliche Injektionsmittel (36) entsprechend besagtem mindestens einen oberen Teil (46) angeordnet sind.

4. Metallurgische Anlage (10) wie in Anspruch 3, **dadurch gekennzeichnet, dass** besagte Vorrichtung (12) auch sowohl erste zusätzliche Injektoren (42), die der Brennkammer (31) zugeordnet und konfiguriert sind, um ein Kühlmittel in besagte Rauchgase (F) zu injizieren, als auch zweite zusätzliche Injektoren (43), die einem ersten (37a) der besagten Auffangelemente zugeordnet und konfiguriert sind, um ein Inertisierungsmittel in besagte Zinkoxidablagerungen zu injizieren, umfasst, die in besagtem ersten Auffangelement (37a) vorhanden sind.

5. Metallurgische Anlage (10) wie in einem der vorstehenden Ansprüche, **dadurch gekennzeichnet, dass** besagter Schmelzofen (11) vom festen und geschlossenen Typ ist und in seinem Inneren eine Schmelzkammer (18) mit einem bestimmten, kontrollierten Innendruck aufweist, wobei besagter Schmelzofen (11) mindestens einen unteren Teil (17), der aus feuerfestem Material besteht und mit einer Abstichloch (20) versehen ist, die konfiguriert ist, um die Extraktion und das Entladen von flüssigem Roheisen (G) zu ermöglichen, sowie eine Extraktionsloch (21), die konfiguriert ist, um die Extraktion und das Entladen von Schlacke (S) zu ermöglichen, umfasst.

6. Metallurgische Anlage (10) wie in Anspruch 5, **dadurch gekennzeichnet, dass** jeweilige Granulationselemente (25, 26) optional besagtem Schmelzofen (11) in Übereinstimmung mit besagtem Abstichloch (20) und besagtem Extraktionsloch (21) zugeordnet sind.

7. Metallurgische Anlage (10) wie in einem der Ansprüche 1 bis 6, **dadurch gekennzeichnet, dass** sie eine oder mehrere Filtervorrichtungen (13) umfasst, die stromabwärts besagter Vorrichtung (12) angeordnet und konfiguriert sind, um Verbrennungsgase (FC) aufzunehmen, die von besagter Vorrichtung (12) kommen, um in besagten Verbrennungsgasen (FC) verbleibendes ZnO zu filtern.

8. Vorrichtung (12) zur Behandlung von Rauchgasen (F), die in einem Schmelzofen (11) einer metallurgischen Anlage (10) erzeugt werden, **dadurch gekennzeichnet, dass** besagte Vorrichtung (12) mit statischen Mitteln zum Extrahieren und Abscheiden von Zinkoxid (ZnO) aus besagten Rauchgasen (F), umfassend mindestens eine Brennkammer (31), die in der Lage ist, die aus dem besagten Schmelzofen (11) kommenden Rauchgase (F) aufzunehmen, einen Behandlungskanal (32) in fluid-dynamischer Verbindung mit besagter Brennkammer (31) und eine Vielzahl von Injektionsmitteln (33, 35, 36), die jeweils besagter Brennkammer (31) und besagtem Behandlungskanal (32) zugeordnet sind und konfiguriert sind, um mindestens ein Oxidationsmittel in besagte Rauchgase (F) zu injizieren, um das Zink (Zn), das darin enthalten ist, zu oxidieren und es in der Form von Zinkoxid (ZnO)-Ablagerungen zurückzugewinnen, wobei besagte Injektionsmittel umfassen:
erste Injektionsmittel (33), die besagter Brennkammer (31) zugeordnet und konfiguriert sind, um eine erste Menge besagten Oxidationsmittels in besagte Rauchgase (F) zu injizieren; und zweite Injektionsmittel (35), die besagtem Behandlungskanal (32) in der Nähe eines oberen Teils besagter Brennkammer (31) zugeordnet und konfiguriert sind, um eine zweite Menge besagten Oxidationsmittels in besagte Rauchgase (F) zu injizieren.

9. Vorrichtung (12) wie in Anspruch 8, **dadurch gekennzeichnet, dass** besagtes Injektionsmittel auch zusätzliche Injektionsmittel (36) umfasst, die entlang besagtem Behandlungskanal (32) angeordnet und konfiguriert sind, um weitere Mengen besagten Oxidationsmittels in besagte Rauchgase (F) zu injizieren, um diese in Verbrennungsgase (FC) umzuwandeln, die an eine Filtervorrichtung (13) geschickt werden.

10. Vorrichtung (12) wie in Anspruch 9, **dadurch gekennzeichnet, dass** besagter Behandlungskanal (32) eine gewundene Form aufweist und mindestens drei im Wesentlichen vertikale Segmente (45) umfasst, die oben mittels mindestens eines oberen Teils (46) in der Form einer Schleife und unten mittels mindestens eines unteren Teils (47) verbunden sind, dadurch, dass unterhalb besagter Brennkammer (31) und in Übereinstimmung mit besagtem mindestens einen unteren Teil (47) jeweilige Auffangelemente (37; 37a, 37b, 37c) zum Auffangen besagter Zinkoxidablagerungen angeordnet sind, und dadurch, dass besagte zusätzliche Injektionsmittel (36) entsprechend besagtem mindestens einen oberen Teil (46) angeordnet sind.

11. Vorrichtung (12) wie in einem der Ansprüche 8 bis 10, **dadurch gekennzeichnet, dass** besagte Vorrichtung (12) auch sowohl erste zusätzliche Injektoren (42), die der Brennkammer (31) zugeordnet und konfiguriert sind, um ein Kühlmittel in besagte Rauchgase (F) zu injizieren, als auch zweite zusätzliche Injektoren (43), die einem ersten (37a) der besagten Auffangelemente zugeordnet und konfiguriert sind, um ein Inertisierungsmittel in besagte Zinkoxidablagerungen zu injizieren, umfasst, die in besagtem ersten Auffangelement (37a) vorhanden sind.

12. Verfahren zur Behandlung von Nebenprodukten, umfassend Pulver, die aus der Herstellung von Stahl mittels eines Lichtbogenofens (EAF) stammen und Zink (Zn) sowie Eisen (Fe)-oxide enthalten,
wobei besagtes Verfahren eine Metallurgische Anlage (10) verwendet, die mindestens einen Schmelzofen (11) aufweist, der in der Lage ist, reduzierbare Metalloxide, die in besagten Nebenprodukten vorhanden sind, zu reduzieren und zu schmelzen und daraus resultierende Metalldämpfe und brennbare Gase zu erzeugen, die als Rauchgase (F) definiert sind, und eine Vorrichtung (12), die mit dem Schmelzofen (11) verbunden ist und in der Lage ist, die Rauchgase (F), die aus dem Schmelzofen (11) austreten, zu behandeln,
besagtes Verfahren, das mindestens einen Beschickungsschritt umfasst, bei dem die Nebenprodukte in den Schmelzofen (11) beschickt werden, sowie einen Reduktions- und Schmelzschritt, bei dem die Nebenprodukte in dem Schmelzofen (11) reduziert und geschmolzen werden, wodurch die Rauchgase (F) entstehen, die zu besagter Vorrichtung (12) geleitet werden,
besagtes Verfahren, das **dadurch gekennzeichnet ist, dass** es auch einen Extraktionsschritt, in dem eine Vielzahl von Injektionsmitteln (33, 35, 36), die jeweils in besagter Vorrichtung (12) und in Verbindung mit besagter Brennkammer (31) und besagtem Behandlungskanal (32) zugeordnet sind, die mindestens ein Oxidationsmittel in besagte Rauchgase (F) injizieren, um das Zink, das darin enthalten ist, zu oxidieren, um es in der Form von Zinkoxid (ZnO)-Ablagerungen zu extrahieren, wobei besagter Extraktionsschritt umfasst:
einen ersten Oxidationsschritt, bei dem erstes Injektionsmittel (33), das innerhalb besagter Brennkammer (31) angeordnet ist, erste Menge besagten Oxidationsmittels in besagte Rauchgase (F) injiziert, um erste Zinkoxidablagerungen zu erzeugen und Teil des Kohlenmonoxids (CO), das im Schmelzofen (11) erzeugt wurde, zu oxidieren, und
einen zweiten Oxidationsschritt, bei dem zweites Injektionsmittel (35), das oberhalb besagter Brennkammer (31) angeordnet ist, eine zweite Menge des besagten Oxidationsmittels in besagte Rauchgase (F) einspritzt, um zweite Zinkoxidablagerungen zu erzeugen und die Oxidation von Kohlenmonoxid (CO) fortzusetzen.

13. Verfahren wie in Anspruch 12, **dadurch gekennzeichnet, dass** besagter Extraktionsschritt auch einen dritten Oxidationsschritt umfasst, bei dem zusätzliche Injektionsmittel (36), die entlang besagtem Behandlungskanal (12) angeordnet sind, weitere Mengen an Oxidationsmittel in besagte Verbrennungsgase (FC) einspritzen, um weitere Zinkoxidablagerungen zu erzeugen und die Oxidation von Kohlenmonoxid (CO) zu vervollständigen.

14. Verfahren wie in Anspruch 13, **dadurch gekennzeichnet, dass** in besagten Oxidationsschritten besagte Zinkoxidablagerungen hauptsächlich stromabwärts ablagern und anschließend in geeigneten Auffangvorrichtungen (37) gesammelt werden, die unterhalb besagter Brennkammer (31) und entlang besagtem Behandlungskanal (32) unterhalb besagter zusätzlicher Injektionsmitteln (36) angeordnet sind.

15. Verfahren wie in Anspruch 14, **dadurch gekennzeichnet, dass** während besagten Schritts der Reduktion und des Schmelzens besagter Nebenprodukte sowohl flüssiges Gusseisen (G) als auch flüssige Schlacke (S) produziert werden, die optional zu Granulierungselementen (25, 26) geschickt werden.

16. Verfahren wie in einem der Ansprüche 12 bis 15, **dadurch gekennzeichnet, dass** besagtes Verfahren nach dem Extraktionsschritt einen Filtrationsschritt umfasst, in dem besagte Verbrennungsgase (FC) zu einer oder mehreren Filtrationsvorrichtungen (13) zur Filtration verbleibender Mengen an ZnO befördert werden.

17. Anordnung zur Herstellung von Stahl, umfassend einen Lichtbogenofen (EAF) zur Stahlherstellung und eine metallurgische Anlage (10) wie in einem der Ansprüche 1 bis 7.

18. Verfahren zur Herstellung von Stahl, umfassend:
i) Stahlherstellung mittels eines Lichtbogenofens (EAF);
ii) Nebenproduktbehandlung, die Pulver umfasst, die aus besagter Stahlherstellung stammen und Zink (Zn) sowie Eisen (Fe)-Oxide enthalten, mittels eines Verfahrens wie in einem der Ansprüche 12 bis 16, wobei einerseits flüssiges Roheisen (G), das im Stahlwerk im Stahlherstellungsschritt i) wiederverwendet werden kann, und flüssige Schlacke (S), die in anderen industriellen Herstellungen verwendet werden kann, sowie andererseits Zink in der Form von Zinkoxid (ZnO) gewonnen werden.

## Revendications

1. Installation métallurgique (10) pour le traitement de sous-produits d'aciéries, comprenant des poudres dérivées de la production d'acier au moyen d'un four à arc électrique (FAE) et contenant des oxydes de zinc (Zn) et de fer (Fe), ladite installation métallurgique (10) comprenant :
- au moins un four de fusion (11) configuré pour réduire et faire fondre les oxydes métalliques réductibles présents dans lesdits sous-produits et générer des vapeurs métalliques et des gaz combustibles conséquents qui sont des fumées définies (F) ;
- un appareil (12) associé audit four de fusion (11) et pouvant traiter lesdites fumées (F), **caractérisé en ce que** ledit appareil (12) est pourvu de moyens statiques pour extraire et séparer l'oxyde de zinc (ZnO) desdites fumées (F), comprenant :
au moins une chambre de combustion (31) pouvant recevoir les fumées (F) provenant dudit four de fusion (11) ;
un conduit de traitement (32) en connexion fluidique dynamique avec ladite chambre de combustion (31) ;
une pluralité de moyens d'injection (33, 35, 36) associés à ladite chambre de combustion (31) et audit conduit de traitement (32), respectivement, qui sont configurés pour injecter au moins un agent oxydant dans lesdites fumées (F) pour oxyder le zinc (Zn) contenu dans celles-ci afin de l'extraire sous forme de dépôts d'oxyde de zinc (ZnO) et pour l'oxydation du monoxyde de carbone (CO) présent dans lesdites fumées (F), dans lequel lesdits moyens d'injection comprennent :
des premiers moyens d'injection (33) associés à ladite chambre de combustion (31) et configurés pour injecter une première quantité dudit agent oxydant dans lesdites fumées (F) ; et des seconds moyens d'injection (35) associés audit conduit de traitement (32) à proximité d'une zone supérieure (39) de ladite chambre de combustion (31) et configurés pour injecter une seconde quantité dudit agent oxydant dans lesdites fumées (F).

2. Installation métallurgique (10) selon la revendication 1, **caractérisée en ce que** lesdits moyens d'injection comprennent également des moyens d'injection d'accessoires (36) disposés le long dudit conduit de traitement (32) et configurés pour injecter d'autres quantités dudit agent oxydant dans lesdites fumées (F) afin de les transformer en fumées de combustion (FC) à envoyer à un appareil de filtration (13).

3. Installation métallurgique (10) selon la revendication 2, **caractérisée en ce que** ledit conduit de traitement (32) a une forme hélicoïdale et comprend au moins trois segments essentiellement verticaux (45), qui sont connectés au sommet au moyen d'au moins une partie supérieure (46) en forme de boucle et au fond au moyen d'au moins une partie inférieure (47), **en ce que** sous ladite chambre de combustion (31) et en correspondance avec ladite au moins une partie inférieure (47) sont disposés des éléments de collecte respectifs (37 ; 37a, 37b, 37c) pour collecter lesdits dépôts d'oxyde de zinc, **et en ce que** lesdits moyens d'injection d'accessoires (36) sont disposés en correspondance avec ladite au moins une partie supérieure (46).

4. Installation métallurgique (10) selon la revendication 3, **caractérisée en ce que** ledit appareil (12) comprend également à la fois des premiers injecteurs supplémentaires (42) associés à ladite chambre de combustion (31) et configurés pour injecter un agent de refroidissement dans lesdites fumées (F), et également des seconds injecteurs supplémentaires (43) associés à un premier (37a) desdits éléments de collecte et configurés pour injecter un agent d'inertage dans lesdits dépôts d'oxyde de zinc présents dans ledit premier élément de collecte (37a).

5. Installation métallurgique (10) selon l'une quelconque des revendications précédentes, **caractérisée en ce que** ledit four de fusion (11) est du type fixe et fermé et a à l'intérieur une chambre de fusion (18) avec une pression interne contrôlée déterminée, ledit four de fusion (11) comprenant au moins une partie inférieure (17) en matériau réfractaire et pourvue d'un trou de coulée (20) configuré pour permettre l'extraction et l'évacuation de la fonte liquide (G), et un trou d'extraction (21) configuré pour permettre l'extraction et l'évacuation de la scorie (S).

6. Installation métallurgique (10) selon la revendication 5, **caractérisée en ce que** des éléments de granulation (25, 26) respectifs sont éventuellement associés audit four de fusion (11), en correspondance avec ledit trou de coulée (20) et ledit trou d'extraction (21).

7. Installation métallurgique (10) selon l'une quelconque des revendications 1 à 6, **caractérisée en ce qu'**elle comprend un ou plusieurs appareils de filtration (13) disposés en aval dudit appareil (12) et configurés pour recevoir des fumées de combustion (FC) provenant dudit appareil (12) afin de filtrer le ZnO restant dans lesdites fumées de combustion (FC).

8. Appareil (12) de traitement de fumées (F) générées dans un four de fusion (11) d'une installation métallurgique (10), **caractérisé en ce que** ledit appareil (12) est pourvu de moyens statiques d'extraction et de séparation d'oxyde de zinc (ZnO) desdites fumées (F), comprenant au moins une chambre de combustion (31) pouvant recevoir les fumées (F) provenant dudit four de fusion (11), un conduit de traitement (32) en liaison fluidodynamique avec ladite chambre de combustion (31), et une pluralité de moyens d'injection (33, 35, 36) associés à ladite chambre de combustion (31) et audit conduit de traitement (32), respectivement, qui sont configurés pour injecter au moins un agent oxydant dans lesdites fumées (F) pour oxyder le Zinc (Zn) contenu dans celles-ci et le récupérer sous forme de dépôts d'oxyde de zinc (ZnO), dans lequel lesdits moyens d'injection comprennent :
des premiers moyens d'injection (33) associés à ladite chambre de combustion (31) et configurés pour injecter une première quantité dudit agent oxydant dans lesdites fumées (F) ; et des seconds moyens d'injection (35) associés audit conduit de traitement (32) à proximité d'une partie supérieure de ladite chambre de combustion (31) et configurés pour injecter une seconde quantité dudit agent oxydant dans lesdites fumées (F).

9. Appareil (12) selon la revendication 8, **caractérisé en ce que** lesdits moyens d'injection comprennent également des moyens d'injection d'accessoires (36) disposés le long dudit conduit de traitement (32) et configurés pour injecter d'autres quantités dudit agent oxydant dans lesdites fumées de combustion (F) pour les transformer en fumées de combustion (FC) à envoyer à un appareil de filtration (13).

10. Appareil (12) selon la revendication 9, **caractérisé en ce que** ledit conduit de traitement (32) a une forme hélicoïdale et comprend au moins trois segments essentiellement verticaux (45), qui sont connectés au sommet au moyen d'au moins une partie supérieure (46) en forme de boucle et au fond au moyen d'au moins une partie inférieure (47), **en ce que** sous ladite chambre de combustion (31) et en correspondance avec ladite au moins une partie inférieure (47) sont disposés des éléments de collecte respectifs (37 ; 37a, 37b, 37c) pour collecter lesdits dépôts d'oxyde de zinc, **et en ce que** lesdits moyens d'injection d'accessoires (36) sont disposés en correspondance avec ladite au moins une partie supérieure (46).

11. Appareil (12) selon l'une quelconque des revendications 8 à 10, **caractérisé en ce qu'**il comprend également à la fois des premiers injecteurs supplémentaires (42) associés à ladite chambre de combustion (31) et configurés pour injecter un agent de refroidissement dans lesdites fumées (F), et également des seconds injecteurs supplémentaires (43) associés à un premier (37a) desdits organes de collecte et configurés pour injecter un agent d'inertage dans lesdits dépôts d'oxyde de zinc présents dans ledit premier organe de collecte (37a).

12. Procédé de traitement de sous-produits comprenant des poudres dérivant de la production d'acier au moyen d'un four électrique à arc (FAE) et contenant des oxydes de zinc (Zn) et de fer (Fe),
ledit procédé utilisant une installation métallurgique (10) ayant au moins un four de fusion (11) pouvant réduire et faire fondre les oxydes métalliques réductibles présents dans lesdits sous-produits et générer des vapeurs métalliques et des gaz combustibles conséquents qui définissent des fumées (F), et un appareil (12) associé audit four de fusion (11) et pouvant traiter lesdites fumées (F) sortant dudit four de fusion (11),
ledit procédé comprenant au moins une étape d'alimentation dans laquelle lesdits sous-produits sont introduits dans ledit four de fusion (11), et une étape de réduction et de fusion dans laquelle lesdits sous-produits sont réduits et fondus dans ledit four de fusion (11), générant par conséquent lesdites fumées (F) qui sont transportées vers ledit appareil (12),
ledit procédé étant **caractérisé en ce qu'**il comprend également une étape d'extraction dans laquelle une pluralité de moyens d'injection (33, 35, 36), présents dans ledit appareil (12) et associés à ladite chambre de combustion (31) et audit conduit de traitement (32), respectivement, injectent au moins un agent oxydant dans lesdites fumées (F) pour oxyder le zinc contenu dans celles-ci et l'extraire sous forme de dépôts d'oxyde de zinc (ZnO), ladite étape d'extraction comprenant :
une première étape d'oxydation dans laquelle des premiers moyens d'injection (33), disposés à l'intérieur de ladite chambre de combustion (31), injectent une première quantité dudit agent oxydant dans lesdites fumées (F) pour générer des premiers dépôts d'oxyde de zinc et oxyder une partie du monoxyde de carbone (CO) généré dans le four de fusion (11), et
une deuxième étape d'oxydation dans laquelle des seconds moyens d'injection (35), disposés au-dessus de ladite chambre de combustion (31), injectent une seconde quantité dudit agent oxydant dans lesdites fumées (F) pour générer des seconds dépôts d'oxyde de zinc et poursuivre l'oxydation du monoxyde de carbone (CO).

13. Procédé selon la revendication 12, **caractérisé en ce que** ladite étape d'extraction comprend également une troisième étape d'oxydation dans laquelle des moyens d'injection d'accessoires (36), disposés le long dudit conduit de traitement (12), injectent d'autres quantités d'agent oxydant dans lesdites fumées de combustion (FC) pour générer d'autres dépôts d'oxyde de zinc et achever l'oxydation du monoxyde de carbone (CO).

14. Procédé selon la revendication 13, **caractérisé en ce que dans** lesdites étapes d'oxydation, lesdits dépôts d'oxyde de zinc sont déposés principalement vers le bas et sont ensuite collectés dans des éléments de collecte appropriés (37) disposés sous ladite chambre de combustion (31) et le long dudit conduit de traitement (32), sous lesdits moyens d'injection d'accessoires (36).

15. Procédé selon la revendication 14, **caractérisé en ce que** pendant ladite étape de réduction et de fusion desdits sous-produits, on produit à la fois de la fonte liquide (G) et également de la scorie liquide (S), qui sont éventuellement envoyées aux organes de granulation (25, 26).

16. Procédé selon l'une quelconque des revendications 12 à 15, **caractérisé en ce que** ledit procédé comprend, après l'étape d'extraction, une étape de filtration dans laquelle lesdites fumées de combustion (FC) sont acheminées vers un ou plusieurs appareils de filtration (13) pour la filtration des quantités restantes de ZnO.

17. Ensemble pour la production d'acier comprenant un four à arc électrique (FAE) pour produire de l'acier et une installation métallurgique (10) selon l'une quelconque des revendications 1 à 7.

18. Procédé de production d'acier comprenant :
i) la production d'acier au moyen d'un four électrique à arc (FAE) ;
ii) le traitement des sous-produits comprenant des poudres dérivant de ladite production d'acier et contenant des oxydes de zinc (Zn) et de fer (Fe) au moyen d'un procédé selon l'une quelconque des revendications 12 à 16, en récupérant d'une part de la fonte liquide (G) qui peut être recyclée dans les aciéries dans l'étape de production d'acier i) et de la scorie liquide (S) qui peut être utilisée dans d'autres productions industrielles, et d'autre part du zinc sous forme d'oxyde de zinc (ZnO).
